# FASCICULE DE BREVET EUROPEEN

(11) **EP 2 027 197 B1**
(45) Date de publication et mention de la délivrance du brevet: **24.02.2010**
(21) Numéro de dépôt: 07729357.9
(22) Date de dépôt: 22.05.2007
(51) Int. Cl.: C08J 11/04

(54) **PROCEDE DE TRAITEMENT D'UN ARTICLE COMPRENANT UN MATERIAU PLASTIQUE RECOUVERT PAR UN MATERIAU SILICONE**
BEHANDLUNGSVERFAHREN FÜR EINEN EIN KUNSTSTOFFMATERIAL UMFASSENDEN GEGENSTAND, DER MIT EINEM SILIKONMATERIAL ÜBERZOGEN IST
TREATMENT METHOD FOR AN ARTICLE COMPRISING A PLASTIC MATERIAL COVERED BY A SILICONE MATERIAL

(30) Priorité: 22.05.2006 FR 0604544
(43) Date de publication de la demande: 25.02.2009
(73) Titulaire: Rhodia Opérations, 93306 Aubervilliers (FR)
(72) Inventeur: MIGNANI, Gérard, 69008 Lyon (FR)
(74) Mandataire: Valentino, Cédric
(86) Numéro de dépôt international: PCT/EP2007/054915
(87) Numéro de publication internationale: WO 2007/135140

(56) Documents cités:
- EP-A- 0 589 642
- EP-A2- 0 950 684
- GB-A- 1 229 210
- US-A- 4 161 464
- US-A- 5 384 159

## Description

La présente invention concerne un procédé de traitement d'un article comprenant un matériau plastique recouvert par un matériau silicone, utilisant une solution aqueuse comprenant un hydroxyde de métal alcalin ou alcalino-terreux et un catalyseur de transfert de phase. L'invention concerne plus particulièrement les matériaux textiles recouverts d'un élastomère silicone en couche mince, tel que notamment les sacs de protection gonflable utilisés pour la protection des occupants d'un véhicule de type air bag.

### ART ANTÉRIEUR

Il existe de nombreux articles à base de matières thermoplastiques, notamment polyamide ou polyester, de type articles textiles, films ou pièces moulées par exemple, recouverts par un matériau silicone en vue de lui conférer certaines propriétés, notamment d'étanchéité et/ou de résistance à l'abrasion. Ces articles sont généralement fabriqués par dépôt d'une composition silicone réticulable pour former une couche mince d'élastomère silicone.

Toutefois, il se pose le problème du recyclage des composants de ces articles et notamment de la récupération du matériau plastique. En effet, il est très difficile de dissocier mécaniquement le matériau silicone de la matière plastique. Il existe pour ce faire des voies chimiques mais qui présentent des inconvénients dans leur mise en oeuvre et qui altèrent les propriétés de la matière thermoplastique.

Il existe ainsi un besoin de mettre au point un procédé simple à mettre en oeuvre permettant un recyclage optimal de ces articles, sans notamment altérer négativement ou dégrader la matrice plastique.

### INVENTION

La demanderesse a mis au point un procédé de recyclage d'un articles comprenant au moins un matériau plastique recouvert par un matériau silicone, utilisant une solution aqueuse comprenant un hydroxyde de métal alcalin ou alcalino-terreux et un catalyseur de transfert de phase ne présentant pas les inconvénients mentionnés précédemment. En effet, l'utilisation combinée d'un hydroxyde de métal alcalin ou alcalino-terreux et d'un catalyseur de transfert de phase permet d'obtenir une séparation efficace du matériau silicone et du matériau plastique, sans entraîner une modification de la structure du plastique, tel que le polyamide ou le polyester, notamment une dégradation de leur poids moléculaire.

La présente invention concerne ainsi un procédé de traitement d'un article comprenant au moins un matériau plastique recouvert par un matériau silicone comprenant au moins les étapes suivantes :
- a) on traite ledit article avec une solution aqueuse comprenant un hydroxyde de métal alcalin ou alcalino-terreux et un catalyseur de transfert de phase, éventuellement en chauffant, de façon à dissoudre ou mettre en suspension dans la solution aqueuse tout ou partie du matériau silicone ; et
- b) on sépare le matériau plastique de la solution.

Dans l'étape a) du procédé selon l'invention, le matériau silicone est séparée du matériau plastique et se retrouve dans la solution aqueuse, sous forme dissoute ou en suspension.

Les catalyseurs par transfert de phase sont biens connus et sont habituellement utilisés pour effectuer une réaction entre un anion (par exemple l'ion hydroxyle), situé dans une phase aqueuse, et un substrat organique. Par catalyseur de transfert de phase, on entend ainsi un catalyseur capable de faire passer un anion d'une phase aqueuse à une phase organique.

Selon l'invention, on entend particulièrement par catalyseur par transfert de phase une molécule amphiphile permettant de transférer les réactifs ions hydroxyles de la phase aqueuse de la solution vers la phase organique de la silicone. Ce catalyseur présente notamment un contre-ion positif qui partage son affinité entre la phase aqueuse et la phase organique. Ces ions transporteurs sont recyclés au fur et à mesure de la réaction, c'est pourquoi on parle de catalyse par transfert de phase.

Dans ce procédé, les ions hydroxyles réagissent avec les chaînes silicones du matériau silicone pour former des silanolates. Les dérivés silanolates se retrouvent alors sous forme dissoute ou en suspension dans la solution aqueuse.

Dans le procédé de l'invention, on peut faire appel aux catalyseurs de transfert de phase connus, notamment, ceux décrits dans l'ouvrage de Jerry MARCH-Advanced Organic Chemistry, 3ème édition, John Wiley & Sons, 1985 p. 320 et suivantes.

Les catalyseurs par transfert de phase utilisés dans le procédé de l'invention sont préférentiellement des sels d'oniums, dont les ions onium dérivent notamment de l'azote, du phosphore, de l'arsenic, du soufre, du sélénium, de l'oxygène, du carbone ou de l'iode et coordiné à des restes hydrocarbonés. Les ions onium dérivant de l'azote, du phosphore ou de l'arsenic seront quadricoordinés. Les ions onium dérivant du soufre, du sélénium, de l'oxygène, du carbone ou de S=O seront tricoordinés tandis que les ions onium dérivant de l'iode seront dicoordinés. Les restes hydrocarbonés coordinés à ces différents éléments sont des groupes alkyles, alcényles, aryles, cycloalkyles, aralkyles éventuellement substitués, deux restes hydrocarbonés coordinés pouvant former ensemble un groupe unique divalent.

Les catalyseurs préférentiellement mis en oeuvre dans le procédé de l'invention sont les sels d'ammonium, de phosphonium, pyridinium et/ou de sulfonium.

A titre d'exemples d'ions onium, on peut citer les cations : tétraméthylammonium, triéthylméthylammonium; tributylmethylammonium, trimethylpropylammonium, tétraéthylammonium, tétrabutylammonium, tétraméthylphosphonium, tétrabutylphosphonium, éthyltriméthylphosphonium, triméthylpentylphosphonium, octyltriméthylphosphonium, tétraphénylphosphonium, cétyltriméthyl phosphonium, cétyltriphénylphosphonium, alkyltris(hydroxyméthyl)phosphonium, n-butyltriphénylphosphonium, triphényl phosphonium portant une chaîne hydrocarbonée comportant de 10 à 16 atomes de carbone, N-methylpyridinium, N-ethylpyridinium, trimethylsulfonium, triethylsulfonium, et triphenylsulfonium.

La nature des anions liés à ces cations organiques n'a pas d'importance critique. Toutes les bases "dures" ou "intermédiaires" conviennent comme anion. Par base "dure" ou "intermédiaire", on entend tout anion répondant à la définition classique donnée par R. PEARSON dans Journal of Chem. Ed. 45, pages 581-587 (1968), les termes "dure" et "intermédiaire" ayant respectivement la signification des termes de"hard"et"borderline"utilisés dans cette référence. Parmi les bases "dures" ou "intermédiaires" pouvant constituer l'anion desdits sels d'onium, on peut citer les ions : F⁻, Cl⁻, Br⁻, l⁻, PO₄³⁻, HPO₄²⁻, H₂P0₄⁻, SO₄²⁻, HSO₄⁻, et NO₃⁻. On préfère notamment les ions chlorures et bromures.

Conviennent tout particulièrement bien, les ions ammonium dont les quatre groupes sont des groupes alkyle ayant de 1 à 5 atomes de carbone ou un groupe benzyle. En ce qui concerne le choix de l'anion, on préférera les ions chlorures et bromures.

On préfère particulièrement comme catalyseur le chlorure de tétrabutylammonium, le bromure de cétyltriméthyl phosphonium, le chlorure de cétyltriphénylphosphonium, le chlorure ou bromure d'alkyltris(hydroxyméthyl)phosphonium, le bromure de triphényl phosphonium portant une chaîne hydrocarbonée comportant de 10 à 16 atomes de carbone, le chlorure de n-butyltriphénylphosphonium.

Le sel d'onium peut être introduit dans la solution aqueuse, à l'état solide ou sous forme d'une solution dans l'un de ses solvants, le plus souvent l'eau.

Comme hydroxyde de métal alcalin, on peut notamment citer LiOH, NaOH et KOH.

On utilise généralement de 1 à 60 % en poids d'hydroxyde de métal alcalin ou alcalino-terreux dans la solution aqueuse, préférentiellement de 5 à 50 % en poids, plus préférentiellement de 10 à 40 % en poids. La solution aqueuse peut comprendre de 0,1 à 10 % en moles de catalyseur de transfert de phase, par rapport au nombre de moles d'ions hydroxyle, préférentiellement de 1 à 3 % en moles.

Le matériau plastique peut prendre diverses formes susceptibles d'être recouvert par un matériau silicone ; et peut se présenter notamment sous forme de fils, fibres, articles textiles, pièces moulées, pièces extrudées, ou films. Les articles textiles peuvent être tissés, non tissés ou tricotés par exemple.

A titre d'exemples, on peut citer les sacs gonflables utilisés pour la protection des occupants d'un véhicule (air bag), les bandes transporteuses, les tissus coupe-feu, les isolants thermiques, les compensateurs, tels que les manchons flexibles d'étanchéité pour tuyauterie, les tubes, les films, les vêtements ou bien encore des matériaux souples destinés à être utilisés dans l'architecture textile intérieure ou extérieure, tels que les bâches, les tentes, les stands, et les chapiteaux.

Le matériau plastique est préférentiellement en matière thermoplastique, notamment à base de polyamide, de polyester et/ou de polyoléfine.

Comme type de polyamide, on peut citer, par exemple, les polyamides semi-cristallins ou amorphes, tels que les polyamides aliphatiques ou semi-aromatiques. On peut notamment citer les (co)polyamides 6 ; 6.6; 4.6 ; 6.10; 6.12 ; 11,12, et/ou mélanges, tels que les polyamides 6/6.6.

Comme type de polyester, on peut citer le polyéthylène téréphtalate (PET) qui désigne aussi bien un homopolymère obtenu uniquement à partir de monomères acide téréphtalique ou ses esters comme le diméthyltéréphtalate et ethylène glycol que des copolymères.

Comme type de polyoléfine, on peut citer les polyéthylènes et polypropylènes.

Il existe de nombreuses formulations silicones liquides réticulables susceptibles d'être utilisées pour former un revêtement qui permette d'apporter des fonctionnalités à un grand nombre de matériaux plastiques. Il est possible d'utiliser une grande variété de formulations polyorganosiloxanes (POS) multicomposantes, bicomposantes ou monocomposantes réticulant à température ambiante ou à la chaleur par des réactions de polyaddition, d'hydrosilylation, radicalaire ou de polycondensation. Il est à noter que les compositions silicones sont amplement décrites dans la littérature et notamment dans l'ouvrage de Walter NOLL "Chemistry and Technology of Silicones", Academic Press, 1968, 2ème édition, notamment pages 386 à 409.

Le revêtement silicone du matériau plastique peut être constitué d'une huile ou d'une résine silicone par exemple.

La procédé de l'invention est particulièrement adapté au recyclage d'un matériau plastique recouvert par un matériau silicone réticulé par une réaction de polycondensation sous l'action de l'humidité, en présence généralement d'un catalyseur connu du domaine (voir par exemple la demande FR2865223).

L'étape de traitement a) du procédé de l'invention peut être effectuée dans un récipient, tel qu'une cuve ou un bassin par exemple. Dans cette étape, on peut éventuellement chauffer le milieu réactionnel à une température comprise entre 20 et 100°C. Dans cette étape, l'article peut rester en contact avec la solution de une a quelques heures, par exemple entre 1 et 3 heures, ou même jusqu'à 24 heures, selon la quantité de matière silicone recouvrant ledit matériau plastique. Le milieu réactionnel peut éventuellement être mis en agitation.

On peut notamment dans l'étape de traitement a) introduire l'article comprenant au moins un matériau plastique recouvert par un matériau silicone sous forme broyée ou coupée.

La séparation du matériau plastique et de la solution à l'étape b) du procédé de l'invention peut être effectué par retrait de ce matériau plastique ou par écoulement de la solution aqueuse. Le matériau plastique peut éventuellement être lavé à l'eau et/ou être séché par des moyens conventionnels.

Il est également possible de rajouter au procédé de l'invention une étape c) dans laquelle le matériau plastique est traité avec un acide, notamment pour effectuer une neutralisation des ions hydroxyles restant dans ledit matériau plastique. On peut à cet effet utiliser une solution aqueuse comprenant un acide, notamment de l'acide acétique, l'acide formique, l'acide phosphorique ou l'acide stéarique ou l'acide adipique. Le matériau peut éventuellement être lavé à l'eau et/ou être séché par des moyens conventionnels.

Le matériau plastique récupéré peut ensuite être transformé en granulés.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Exempte 1 :

Une pièce de 100 g d'un air bag en polyamide 66, recouvert d'une résine silicone réticulée par polycondensation, est immergée dans 20 g d'une solution aqueuse à 50 % en poids de NaOH comprenant 1 % en poids de chlorure de tétrabutylammonium. Après 3 heures de contact à une température de 60°C, on retire la pièce de la solution. On la lave à l'eau et on la rince ensuite avec une solution aqueuse à 5 % en poids d'acide acétique. On relave ensuite à l'eau jusqu'à ce que le pH de l'eau soit neutre.

Une analyse par fluorescence X permet d'observer l'absence de tout dérivé silicié à la surface de la pièce suite au traitement. Une observation par DSC permet de vérifier que le poids moléculaire du polyamide n'a pas été modifié suite au traitement.

### Exemple 2 (comparatif):

Une pièce de 100 g d'un air bag en polyamide 66, recouvert d'une résine silicone réticulée par polycondensation-polyaddition, est immergée dans 20 g d'une solution aqueuse à 50 % en poids de NaOH. Après 3 heures de contact à une température de 60°C, on retire la pièce de la solution. On la lave à l'eau et on la rince ensuite avec une solution aqueuse à 5 % en poids d'acide acétique. On relave ensuite à l'eau jusqu'à ce que le pH de l'eau soit neutre.

Une analyse par fluorescence X permet d'observer la présence de tout le dérivé silicié à la surface de la pièce suite au traitement. On reprend ces pièces de polyamide et on laisse réagir à 100°C durant 24h. Une analyse par fluorescence X permet d'observer la présence de la majorité du dérivé silicié à la surface de la pièce.

### Exemple 3 :

Une pièce de 100 g d'un air bag en polyamide 66, recouvert d'une résine silicone réticulée par polycondensation -polyaddition, est immergée dans 20 g d'une solution aqueuse à 50 % en poids de NaOH comprenant 0,5 % en poids de chlorure de tétrabutylphosphonium. Après 16 heures de contact à une température de 100°C, on retire la pièce de la solution. On la lave à l'eau et on la rince ensuite avec une solution aqueuse à 5 % en poids d'acide acétique. On relave ensuite à l'eau jusqu'à ce que le pH de l'eau soit neutre.

Une analyse par fluorescence X permet d'observer l'absence de tout dérivé silicié à la surface de la pièce suite au traitement. Une observation par DSC permet de vérifier que le poids moléculaire du polyamide n'a pas été modifié suite au traitement.

### Exemple 4 :

Une pièce de 100 g d'un air bag en polyamide 66, recouvert d'une résine silicone réticulée par polycondensation-polyaddition, est immergée dans 20 g d'une solution aqueuse à 50 % en poids de NaOH comprenant 0,5 % en poids de chlorure de triméthyldodécylphosphonium. Après 16 heures de contact à une température de 100°C, on retire la pièce de la solution. On la lave à l'eau et on la rince ensuite avec une solution aqueuse à 5 % en poids d'acide acétique. On relave ensuite à l'eau jusqu'à ce que le pH de l'eau soit neutre.

Une analyse par fluorescence X permet d'observer l'absence de tout dérivé silicié à la surface de la pièce suite au traitement. Une observation par DSC permet de vérifier que le poids moléculaire du polyamide n'a pas été modifié suite au traitement.

## Revendications

1. Procédé de traitement d'un article comprenant au moins un matériau plastique recouvert par un matériau silicone comprenant au moins les étapes suivantes :
- a) on traite ledit article avec une solution aqueuse comprenant un hydroxyde de métal alcalin ou alcalino-terreux et un catalyseur de transfert de phase, éventuellement en chauffant, de façon à dissoudre ou mettre en suspension dans la solution aqueuse tout ou partie du matériau silicone ; et
- b) on sépare le matériau plastique de la solution.

2. Procédé selon la revendication 1, **caractérisé en ce que** les catalyseurs par transfert de phase sont choisis dans le groupe comprenant les sels d'oniums dont les ions onium dérivent de l'azote, du phosphore, de l'arsenic, du soufre, du sélénium, de l'oxygène, du carbone ou de l'iode et coordiné à des restes hydrocarbonés.

3. Procédé selon la revendication 1 ou 2, **caractérisé en ce que** les catalyseurs par transfert de phase sont choisis dans le groupe comprenant sont les sels d'ammonium, de phosphonium, pyridinium et/ou de sulfonium.

4. Procédé selon l'une quelconque des revendications 1 à 3, **caractérisé en ce que** le catalyseur par transfert de phase est choisi dans le groupe comprenant sont les sels de tétraméthylammonium, triéthylméthylammonium, tributylmethylammonium, trimethylpropylammonium, tétraéthylammonium, tétrabutylammonium, tétraméthylphosphonium, tétrabutylphosphonium, éthyltriméthylphosphonium, triméthylpentylphosphonium, octyltriméthylphosphonium, tétraphénylphosphonium, cétyltriméthyl phosphonium, cétyltriphénylphosphonium, Alkyltris(hydroxyméthyl)phosphonium, n-Butyltriphénylphosphonium, triphényl phosphonium portant une chaîne hydrocarbonée comportant de 10 à 16 atomes de carbone, N-methylpyridinium, N-ethylpyridinium, trimethylsulfonium, triethylsulfonium, et triphenylsulfonium.

5. Procédé selon l'une quelconque des revendications 1 à 4, **caractérisé en ce que** hydroxyde de métal alcalin est choisi dans le groupe comprenant LiOH, NaOH et KOH.

6. Procédé selon l'une quelconque des revendications 1 à 5, **caractérisé en ce que** la solution aqueuse comprend de 0,1 à 10 % en moles de catalyseur de transfert de phase, par rapport au nombre de moles d'ions hydroxyle.

7. Procédé selon l'une quelconque des revendications 1 à 6, **caractérisé en ce que** le matériau plastique se présente sous forme de fils, fibres, articles textiles, pièces moulées, pièces extrudées, ou films.

8. Procédé selon l'une quelconque des revendications 1 à 7, **caractérisé en ce que** le matériau plastique est à base de polyamide, de polyester et/ou de polyoléfine.

9. Procédé selon l'une quelconque des revendications 1 à 8, **caractérisé en ce que** le matériau plastique est recouvert par un matériau silicone provenant d'une formulation polyorganosiloxane multicomposante, bicomposante ou monocomposante réticulant à température ambiante ou à la chaleur par des réactions de polyaddition, d'hydrosilylation, radicalaire ou de polycondensation.

10. Procédé selon l'une quelconque des revendications 1 à 9, **caractérisé en ce que** le matériau plastique est recouvert par un matériau silicone réticulé par une réaction de polycondensation sous l'action de l'humidité, en présence d'un catalyseur.

11. Procédé selon l'une quelconque des revendications 1 à 10, **caractérisé en ce que** dans l'étape a), le milieu réactionnel est chauffé à une température comprise entre 20 et 100°C.

12. Procédé selon l'une quelconque des revendications 1 à 11, **caractérisé en ce que** suite à l'étape b), le matériau plastique est lavé à l'eau et/ou être séché.

13. Procédé selon l'une quelconque des revendications 1 à 12, **caractérisé en ce qu'**il comprend une étape c) supplémentaire de traitement du matériau plastique par un acide et éventuellement de lavage à l'eau et/ou de séchage.

## Claims

1. Method for treating an article comprising at least one plastic covered with a silicone material that comprises at least the following steps:
- a) said article is treated with an aqueous solution comprising an alkali or alkaline-earth metal hydroxide and a phase transfer catalyst, optionally by heating, so as to dissolve or suspend all or some of the silicone material in the aqueous solution; and
- b) the plastic is separated from the solution.

2. Method according to Claim 1, **characterized in that** the phase transfer catalysts are chosen from the group comprising onium salts, the onium ions of which derive from nitrogen, phosphorus, arsenic, sulphur, selenium, oxygen, carbon or iodine, coordinated to hydrocarbon-based residues.

3. Method according to Claim 1 or 2, **characterized in that** the phase transfer catalysts are chosen from the group comprising the salts of ammonium, phosphonium, pyridinium and/or sulphonium.

4. Method according to any one of Claims 1 to 3, **characterized in that** the phase transfer catalyst is chosen from the group comprising the salts of tetramethylammonium, triethylmethylammonium, tributylmethylammonium, trimethylpropylammonium, tetraethylammonium, tetrabutylammonium, tetramethylphosphonium, tetrabutylphosphonium, ethyltrimethylphosphonium, trimethylpentylphosphonium, octyltrimethylphosphonium, tetraphenylphosphonium, cetyltrimethylphosphonium, cetyltriphenylphosphonium, alkyltris(hydroxymethyl)phosphonium, n-butyltriphenylphosphonium, triphenylphosphonium bearing a hydrocarbon-based chain comprising from 10 to 16 carbon atoms, N-methylpyridinium, N-ethylpyridinium, trimethylsulphonium, triethylsulphonium and triphenylsulphonium.

5. Method according to any one of Claims 1 to 4, **characterized in that** the alkali metal hydroxide is chosen from the group comprising LiOH, NaOH and KOH.

6. Method according to any one of Claims 1 to 5, **characterized in that** the aqueous solution comprises from 0.1 to 10 mol% of phase transfer catalyst relative to the number of moles of hydroxyl ions.

7. Method according to any one of Claims 1 to 6, **characterized in that** the plastic is present in the form of yarns, fibers, textile articles, moulded parts, extruded parts or films.

8. Method according to any one of Claims 1 to 7, **characterized in that** the plastic is based on polyamide, on polyester and/or on polyolefin.

9. Method according to any one of Claims 1 to 8, **characterized in that** the plastic is covered with a silicone material originating from a multi-component, two-component or single-component polyorganosiloxane formulation that crosslinks at room temperature or at high temperature by polyaddition, hydrosilylation, radical or polycondensation reactions.

10. Method according to any one of Claims 1 to 9, **characterized in that** the plastic is covered with a silicone material that is crosslinked by a polycondensation reaction under the action of moisture, in the presence of a catalyst.

11. Method according to any one of Claims 1 to 10, **characterized in that** in step a), the reaction medium is heated to a temperature between 20 and 100°C.

12. Method according to any one of Claims 1 to 11, **characterized in that**, following step b), the plastic is washed with water and/or dried.

13. Method according to any one of Claims 1 to 12, **characterized in that** it comprises an additional step c) of treating the plastic with an acid and optionally washing with water and/or drying.

## Patentansprüche

1. Verfahren zur Behandlung eines Gegenstands, der mindestens einen mit einem Silikonmaterial beschichteten Kunststoff umfaßt, bei dem man:
- a) den Gegenstand mit einer wäßrigen Lösung, die ein Alkali- oder Erdalkalimetallhydroxid und einen Phasentransferkatalysator enthält, behandelt, gegebenenfalls unter Erwärmen, wodurch das Silikonmaterial ganz oder teilweise in der wäßrigen Lösung gelöst oder suspendiert wird; und
- b) das Kunststoffmaterial von der Lösung trennt.

2. Verfahren nach Anspruch 1, **dadurch gekennzeichnet, daß** man die Phasentransferkatalysatoren aus der Gruppe, umfassend Oniumsalze, deren Oniumionen sich von Stickstoff, Phosphor, Arsen, Schwefel, Selen, Sauerstoff, Kohlenstoff oder Iod, der bzw. das an Kohlenwasserstoffreste koordiniert ist, ableiten, auswählt.

3. Verfahren nach Anspruch 1 oder 2, **dadurch gekennzeichnet, daß** man die Phasentransferkatalysatoren aus der Gruppe, umfassend Ammonium-, Phosphonium-, Pyridinium- und/oder Sulfoniumsalze, auswählt.

4. Verfahren nach einem der Ansprüche 1 bis 3, **dadurch gekennzeichnet, daß** man den Phasentransferkatalysator aus der Gruppe, umfassend Tetramethylammoniumsalze, Triethylmethylammoniumsalze, Tributylmethylammoniumsalze, Trimethylpropylammoniumsalze, Tetraethylammoniumsalze, Tetrabutylammoniumsalze, Tetramethylphosphoniumsalze, Tetrabutylphosphoniumsalze, Ethyltrimethylphosphoniumsalze, Trimethylpentylphosphoniumsalze, Octyltrimethylphosphoniumsalze, Tetraphenylphosphoniumsalze, Cetyltrimethylphosphoniumsalze, Cetyltriphenylphosphoniumsalze, Alkyltris(hydroxymethyl)phosphoniumsalze, n-Butyltriphenylphosphoniumsalze, Triphenylphosphoniumsalze mit einer Kohlenwasserstoffkette mit 10 bis 16 Kohlenstoffatomen, N-Methylpyridiniumsalze, N-Ethylpyridiniumsalze, Trimethylsulfoniumsalze, Triethylsulfoniumsalze und Triphenylsulfoniumsalze, auswählt.

5. Verfahren nach einem der Ansprüche 1 bis 4, **dadurch gekennzeichnet, daß** man das Alkalimetallhydroxid aus der Gruppe, umfassend LiOH, NaOH und KOH, auswählt.

6. Verfahren nach einem der Ansprüche 1 bis 5, **dadurch gekennzeichnet, daß** die wäßrige Lösung 0,1 bis 10 Mol-% Phasentransferkatalysator, bezogen auf die Zahl der Mole von Hydroxylionen, umfaßt.

7. Verfahren nach einem der Ansprüche 1 bis 6, **dadurch gekennzeichnet, daß** der Kunststoff in Form von Fäden, Fasern, Textilartikeln, Formteilen, Extrusionsteilen oder Folien vorliegt.

8. Verfahren nach einem der Ansprüche 1 bis 7, **dadurch gekennzeichnet, daß** der Kunststoff auf Polyamid, Polyester und/oder Polyolefin basiert.

9. Verfahren nach einem der Ansprüche 1 bis 8, **dadurch gekennzeichnet, daß** der Kunststoff mit einem Silikonmaterial beschichtet ist, das aus einer multikomponentigen, zweikomponentigen oder einkomponentigen Polyorganosiloxanformulierung, die bei Umgebungstemperatur oder in der Wärme durch Polyadditions-, Hydrosilylierungs-, Radikal- oder Polykondensationsreaktionen vernetzt, stammt.

10. Verfahren nach einem der Ansprüche 1 bis 9, **dadurch gekennzeichnet, daß** der Kunststoff mit einem durch eine Polykondensationsreaktion unter Einwirkung von Feuchtigkeit in Gegenwart eines Katalysators vernetzten Silikonmaterial beschichtet ist.

11. Verfahren nach einem der Ansprüche 1 bis 10, **dadurch gekennzeichnet, daß** man in Schritt a) das Reaktionsmedium auf eine Temperatur zwischen 20 und 100°C erhitzt.

12. Verfahren nach einem der Ansprüche 1 bis 11, **dadurch gekennzeichnet, daß** man nach Schritt b) das Kunststoffmaterial mit Wasser wäscht und/oder trocknet.

13. Verfahren nach einem der Ansprüche 1 bis 12, **dadurch gekennzeichnet, daß** man in einem zusätzlichen Schritt c) den Kunststoff mit einer Säure behandelt und gegebenenfalls mit Wasser wäscht und/oder trocknet.
